# EUROPÄISCHE PATENTSCHRIFT

(11) **EP 4 015 204 B1**
(45) Veröffentlichungstag und Bekanntmachung des Hinweises auf die Patenterteilung: **11.10.2023**
(21) Anmeldenummer: 21208899.1
(22) Anmeldetag: 18.11.2021
(51) Int. Cl.: B29D 30/26, B29D 30/32, B29D 30/00

(54) **VORRICHTUNG, SYSTEM UND VERFAHREN ZUM TRANSPORTIEREN EINES KERNS FÜR DIE HERSTELLUNG EINES FAHRZEUGREIFENS**
DEVICE, SYSTEM AND METHOD FOR TRANSPORTING A CORE FOR THE MANUFACTURE OF A VEHICLE TYRE
DISPOSITIF, SYSTÈME ET PROCÉDÉ DE TRANSPORT D'UN NOYAU POUR LA FABRICATION D'UN PNEUMATIQUE DE VÉHICULE

(30) Priorität: 16.12.2020 DE 102020216025
(43) Veröffentlichungstag der Anmeldung: 22.06.2022
(73) Patentinhaber: Continental Reifen Deutschland GmbH, 30165 Hannover (DE)
(72) Erfinder: Brehmeier, Stefan, 30165 Hannover (DE); Werner, Lukas, 30165 Hannover (DE); Knull, Stephan, 30165 Hannover (DE); Havekost, Yannic, 30165 Hannover (DE); Su, Dejun, 30165 Hannover (DE)
(74) Vertreter: Continental Corporation

(56) Entgegenhaltungen:
- EP-A1- 1 712 345
- EP-A1- 2 796 279
- CN-U- 202 045 890

## Beschreibung

Die Erfindung betrifft eine Vorrichtung zum Transportieren eines Kerns für die Herstellung eines Fahrzeugreifens gemäß dem Oberbegriff des Patentanspruchs 1 und ein System zum Transportieren eines Kerns für die Herstellung eines Fahrzeugreifens gemäß dem Oberbegriff des Patentanspruchs 10. Ferner betrifft die Erfindung ein Verfahren zum Transportieren eines Kerns für die Herstellung eines Fahrzeugreifens gemäß dem Oberbegriff des Patentanspruchs 11.

Die Produktion eines Fahrzeugreifens erfolgt heutzutage in verschiedenen Fertigungsstufen, wobei eine dieser Fertigungsstufen den Reifenaufbau umfasst, bei dem die einzelnen Komponenten zu einem Reifenrohling zusammengefügt werden. Die wesentlichen Komponenten umfassen üblicherweise eine Karkasse, zwei Seitenwände und ein Gürtelpaket, wobei die Karkasse selbst in der Regel aus einer Innenschicht, einer Einlage und zwei Kernen mit Apex besteht. Der Aufbau der Karkasse erfolgt üblicherweise auf einer Trommel, auf der zuerst die Innenschicht und dann die Einlage aufgelegt wird. Anschließend erfolgt der weitere Zusammenbau mit den Kernen, wobei jeder Kern üblicherweise einen Apex aufweist. In diesem Schritt müssen die Kerne zur Karkasstrommel transportiert werden, wobei diese in der Regel zunächst auf eine Kernzentriervorrichtung gespannt und anschließend mit Hilfe eines Magnetkranzes rund und zentrisch übernommen werden. Dabei ist wesentlich, dass ein ausreichender Überlapp zwischen den Kernen und dem Magnetkranz gewährleistet ist, damit der Kern zentriert und fest an der Karkasstrommel eingebaut werden kann. Eine feste Position des Kerns und insbesondere auch des Apex ist letztendlich entscheidend, damit ein fester Sitz des Reifens auf einer Felge gewährleistet werden kann.

Der Transport von Kernen erfolgt derzeit üblicherweise durch einen beschriebenen Magnetkranz, welcher ein metallischer Ring ist, in dem Magnete eingesetzt sind. Die Kerne sind in der Regel aus Stahl, sodass sich die Kerne mit den Magneten verbinden können.

Die EP1712345A1 offenbart beispielsweise eine Reifenformmaschine umfassend ein Paar Wulstkernhaltevorrichtungen zum Halten jeweiliger Wulstkerne, die auf einer radial äußeren Seite eines Karkassenbandes angeordnet sind, so dass der Wulstkern eine Mittelachse mit einem steuerbaren Neigungswinkel hat. Die Wulstkern-Stützvorrichtung, die den Neigungswinkel der Wulstkern-Mittelachse steuert, umfasst eine ringförmige aufrechte Platte, einen Wulsthaltering, der an der ringförmigen aufrechten Platte befestigt ist, zum Halten des Wulstkerns in paralleler Weise, und eine Wulsthalterring-Haltungssteuereinrichtung zum Steuern des Neigungswinkels der Mittelachse des Wulsthalterrings relativ zu der Mittelachse der ringförmigen aufrechten Platte innerhalb eines Winkelbereichs einschließlich null Grad.

Die CN 202045890 U beschreibt einen Reifenwulst-Übertragungsring, bei dem eine Reifenwulst-Voreinstellvorrichtung übernommen wird, bei der eine Pleuelstangenstruktur auf den Ringkörper gesetzt wird. Außerdem wird der Reifenwulstübertragungsring durch Teleskopieren eines Zylinders angetrieben.

Ferner offenbart die EP 2796279 A1 einen Reifenwulstübertragungsring und ein Übertragungsverfahren dafür bereit. Der Reifenwulstübertragungsring und das Übertragungsverfahren verwenden ein vollständiges magnetisches Adsorptionsverfahren und einen photoelektrischen Erkennungsansatz, um die Stabilität beim Aufnehmen, Klemmen und Übertragen von Reifenwülsten zu verbessern, ein Verrutschen und Verformen von Reifenwülsten zu verhindern und die Koaxialität und Vertikalität zwischen Reifenwülsten sicherzustellen und eine Reifenaufbautrommel.

Problematisch ist allerdings, dass eine ausreichende Überlappung durch einen solchen Magnetkranz aufgrund seines vordefinierten Durchmessers nicht gewährleisten kann, wodurch sich die Kontaktfläche zum Magneten und somit die Kraft reduziert, mit der der Kern rund und zentrisch gehalten werden muss. Die Folge ist, dass die Kerne nicht ausreichend zentriert an der Karkasstrommel mit der Einlage in Verbindung gebracht werden, wodurch letztendlich die Performance des Reifens abnimmt.

Hier setzt die vorliegende Erfindung an. Es ist die Aufgabe der vorliegenden Erfindung eine Vorrichtung und ein System für die Herstellung eines Fahrzeugreifens bereitzustellen, durch die der Kerneinbau in die Karkasse und somit die Performance des Reifens verbessert wird. Ferner ist es die Aufgabe der vorliegenden Erfindung ein Verfahren zur Herstellung eines Fahrzeugreifens bereitzustellen, durch das der Kerneinbau in die Karkasse und somit die Performance des Reifens verbessert wird.

Gelöst wird die Aufgabe durch eine Vorrichtung zum Transportieren eines Kerns für die Herstellung eines Fahrzeugreifens mit den Merkmalen des Patentanspruchs 1, durch ein System zum Transportieren eines Kerns für die Herstellung eines Fahrzeugreifens mit den Merkmalen des Patentanspruchs 9 sowie ein Verfahren zum Transportieren eines Kerns für die Herstellung eines Fahrzeugreifens mit den Merkmalen des Patentanspruchs 10. Gelöst wird die Aufgabe durch eine Vorrichtung zum Transportieren eines Kerns für die Herstellung eines Fahrzeugreifens, umfassend einen ersten kreisringförmigen Grundkörper mit mindestens einer ersten und einer zweiten Seite, wobei auf der ersten Seite des Grundkörpers wenigstens zwei Permanentmagnete auf einer Kreisbahn angeordnet sind. Vorteilhafterweise sind die Permanentmagnete so auf der Kreisbahn angeordnet, sodass die Stellen an denen Magnetkraft auf den Kern aufgebracht werden kann, die Magnetfeldlinien kreisförmig um die Rotationsachse angeordnet sind, wodurch ein kreisförmiger Kern kraftschlüssig festgehalten und vorteilhafterweise zentriert und fest zur Trommel für den Karkassaufbau transportiert werden kann. Der Kern weist üblicherweise einen ferromagnetischen Stahlanteil auf, sodass dieser magnetisierbar ist. Entsprechend kann durch ein ausreichend starkes Magnetfeld eine ausreichend starke Verbindung zwischen einer Kontaktfläche der erfindungsgemäßen Vorrichtung oder einer weiteren Vorrichtung und des Kerns hergestellt werden. Vorteilhafterweise ist die erfindungsgemäße Vorrichtung eine, die in derzeitigen Systemen zusätzlich eingebaut werden kann, um diese kostengünstig zu erweitern. Der Kern weist einen bestimmten Durchmesser auf, der an den Durchmesser der jeweiligen Felge angepasst ist. Entsprechend ist die Kreisbahn der Vorrichtung vorteilhafterweise so gewählt, dass diese dem Durchmesser des Kerns entspricht, sodass ein fester Transport gewährleistet werden kann und der Kern zentriert in die Karkasse eingebaut wird. Wenn die zwei Kerne in der Karkasse optimal verbaut sind, verbessert sich die Performance des Reifens, da dieser besser auf der Felge sitzt und folglich weniger Unwucht erzeugt.

Erfindungsgemäß ist der Grundkörper kreisringförmig ausgebildet. Als Kreisring bezeichnet man die Fläche zwischen zwei konzentrischen Kreisen, d. h. zwischen zwei Kreisen mit gemeinsamem Mittelpunkt. Der Grundkörper ist dafür bevorzugt als eine Platte ausgebildet, wobei das Material üblicherweise ein Metall umfasst. Die Größe des Kreisrings ist üblicherweise so gewählt, dass eine Karkasstrommel hindurchgeführt werden kann, da der Ring beim automatisierten Aufbau der Karkasse über die Trommel beziehungsweise die Trommel durch den Ring hindurchfährt.

Bevorzugt sind die Permanentmagnete auf dem Grundkörper angeordnet, sodass die Magnete einfach austauschbar sind und/oder die Anzahl variierbar ist. Eine höhere Anzahl an Magneten erzeugt ein geeigneteres Magnetfeld auf der Kontaktfläche, an der der Kern festgehalten wird. In einer bevorzugten Weiterbildung sind somit mindestens zehn, besonders bevorzugt mindestens 30 und ganz besonders bevorzugt mindestens 50 Permanentmagnete auf dem Grundkörper angeordnet.

In einer bevorzugten Weiterbildung der Erfindung sind die Permanentmagnete auf der ersten Seite entlang des inneren Kreisumfangs auf Magnethalteeinrichtungen angeordnet. Auf einer Magnethaltevorrichtung können mindestens zwei, vorzugsweise mindestens vier, Permanentmagnete angeordnet werden. Vorteilhafterweise kann der Kern somit im Bereich des inneren Kreisumfangs festgehalten werden, sodass der Kern optimal in die Karkasse eingebaut werden kann. Da die Karkasstrommel zwischen dem Ring hindurchfährt beziehungsweise nah an den Kreisring herangeführt wird, kann der Kern ohne großen Abstand zwischen dem Kreisring und der Trommel abgesetzt werden. Die Magnethalteeinrichtungen sind vorteilhaft, da die Permanentmagnete beliebig und einfach in Paketen ausgetauscht werden können.

In einer erfindungsgemäßen Weiterbildung sind die Permanentmagnete mit abwechselnden Polen angeordnet. Vorteilhafterweise wird durch eine alternierende Anordnung der Pole ein stärkeres Magnetfeld erzeugt, sodass der Kern sicherer transportiert werden kann. Durch diese Anordnung wird verhindert, dass der Kern während des Transports in seiner Position verrutscht.

Weiter bevorzugt sind die Permanentmagnete stabförmig oder würfelförmig ausgebildet und weisen vorzugsweise jeweils eine quadratische Kontaktfläche auf. Die Permanentmagnete weisen durch diese Geometrie eine möglichst große Kontaktfläche auf, durch die ein möglichst starkes Magnetfeld erzeugt wird, um den Kern festzuhalten. Die Kontaktfläche ist die Fläche, die zumindest mittelbar mit dem Kern verbunden ist. Üblicherweise wird der Permanentmagnet in eine Senkung eines anderen Bauteils eingeführt, in die die Kontaktfläche zumindest formschlüssig in die Senkung eingeführt werden kann. Eine bevorzugte quadratische Kontaktfläche ist optimal, um einen formschlüssigen Kontakt beispielsweise in einer solchen Senkung zu erreichen. Ferner ist die quadratische Fläche vorteilhaft, um den Kern kraftschlüssig festzuhalten. Alternativ weist der Kern eine kreisrunde Kontaktfläche auf, wodurch auch die beschriebene Senkung eine angepasste Form aufweisen würde.

Ferner bevorzugt sind die Permanentmagnete auf einer Kreisbahn symmetrisch, insbesondere rotationssymmetrisch, angeordnet. Eine symmetrische Anordnung auf der Kreisbahn ist vorteilhaft, da das erzeugte Magnetfeld gleichmäßig über den Ring verteilt ist, sodass der Kern an jeder Stelle gleichmäßig festgehalten wird. Entsprechend verrutscht der Kern während des Transports nicht und kann optimal in die Karkasse eingebaut werden.

In einer weiteren bevorzugten Weiterbildung der Erfindung umfassen die Permanentmagnete Neodym, wobei diese vorzugsweise NdFeB-Magnete sind. Permanentmagnete mit Neodym sind sehr starke Magnete, die vorteilhafterweise zu akzeptablen Kosten herstellbar sind.

Weiter bevorzugt sind auf der zweiten Seite mindestens zwei Pneumatikzylinder, vorzugsweise mit jeweils einem Durchmesser im Bereich von 20 mm bis 30 mm, angeordnet. Vorteilhafterweise kann die Vorrichtung über die Pneumatikzylinder einfacher relativ bewegt werden. Eine zielgenaue Bewegung der Vorrichtung zum Kern und/oder zur Karkasstrommel ist wesentlich, um den Kern zentriert in die Karkasse einzubauen. In einer besonders bevorzugten Weiterbildung sind auf der zweiten Seite mindestens zehn Pneumatikzylinder angeordnet.

Ferner bevorzugt sind auf der ersten Seite mindestens zwei Gleitführungselemente, besonders bevorzugt rotationssymmetrisch, angeordnet. Gleitführungselemente sind vorteilhafterweise nützlich, da diese bei Kontakt mit einer anderen Vorrichtung ein optimales Zusammenführen erlauben. Ein Gleitführungselement kann bevorzugt ein Stift sein, der in eine Senkung einer anderen Vorrichtung während des Zusammenführens gleitet, um die Position des Grundkörpers in Bezug auf die zweite Vorrichtung fest zu definieren. Für eine ausreichend feste Position über den gesamten Ring sind die Gleitführungselemente vorzugsweise rotationssymmetrisch auf dem Grundkörper angeordnet.

Bevorzugt ist auf der ersten Seite mindestens ein Abdrückelement angeordnet. Ein Abdrückelement kann den Vorgang des Entfernens des Grundkörpers vom Kern erleichtern, indem es der magnetischen Kraft an der Kontaktfläche, an der der Kern kraftschlüssig festgehalten wird, mechanisch entgegenwirkt. Ein Abdrückelement kann beispielsweise ein Feder- oder ein Hydrauliksystem sein, das den Grundkörper von einer zweiten Vorrichtung oder vom Kern wegdrückt. Die Magnetfeldstärke an der magnetischen Kontaktfläche ist von der Relativbewegung des Grundkörpers abhängig, sodass diese verringert werden kann, in dem Grundkörper vom Kern wegbewegt wird.

Ferner wird die Aufgabe der Erfindung durch ein System zum Transportieren eines Kerns für die Herstellung eines Fahrzeugreifens gelöst, umfassend eine erste bereits beschriebene Vorrichtung und eine zweite kreisringförmige Vorrichtung mit mindestens zwei Senkungen, wobei die Permanentmagnete der ersten Vorrichtung in die Senkungen der zweiten Vorrichtung einführbar sind. Vorteilhafterweise ist die erste Vorrichtung eine, die in derzeitigen Systemen zusätzlich eingebaut werden kann, um ein solches System kostengünstig zu verbessern. Die zweite Vorrichtung ist vorzugsweise als eine Umbukglocke ausgebildet. Die Umbukglocke ist kreisringförmig ausgebildet und weist eine magnetische Kontaktfläche auf, an der der Kern festgehalten werden kann. Diese magnetische Kontaktfläche befindet sich im entgegengesetzten Bereich der Senkungen, die vorzugsweise so ausgebildet sind, dass die Permanentmagnete der ersten Vorrichtung formschlüssig in die Senkungen eingeführt werden können. Die Grundfläche der Senkung kontaktiert bei vollständiger Verbindung die Kontaktfläche der Magnete. In dieser Position weist die magnetische Kontaktfläche der zweiten Vorrichtung ein maximales Magnetfeld auf, sodass der Kern an der magnetischen Kontaktfläche festgehalten werden kann. Diese Position wird als transportfähiger Zustand bezeichnet. Die Magnetfeldstärke an der magnetischen Kontaktfläche ist von der Relativbewegung des Grundkörpers beziehungsweise der Permanentmagnete in Bezug auf die zweite Vorrichtung abhängig. Werden die Permanentmagnete aus den Senkungen herausgeführt, verringert sich die Magnetfeldstärke im Bereich der magnetischen Kontaktfläche. Ist die Magnetfeldstärke so gering, dass der Kern nicht mehr kraftschlüssig festgehalten werden kann, wird dies als nicht-transportfähiger Zustand bezeichnet.

Bevorzugt weist die zweite Vorrichtung genauso viele Senkungen auf, wie Permanentmagnete auf dem Grundkörper der ersten Vorrichtung angeordnet sind, sodass jeder Permanentmagnet in jeweils eine Senkung eingeführt werden kann. Somit kann eine maximale Kraft an der magnetischen Kontaktfläche der zweiten Vorrichtung erzeugt werden, um den Kern fest transportieren zu können.

Denkbar ist, dass die Senkungen auf der Innenfläche beschichtet sind, sodass das Ein- und Ausführen der Permanentmagnet in die Senkungen einfacher erfolgen kann. Eine Beschichtung könnte beispielsweise ein isolierendes oder ein nicht isolierendes Material umfassen.

Bevorzugt weist die Umbukglocke einen maximalen Durchmesser im Bereich von 65 cm bis 75 cm auf und/oder 25 Zoll. Der Grundkörper der ersten Vorrichtung weist bevorzugt einen Durchmesser im Bereich von 55 cm bis 70 cm und eine Dicke im Bereich von 1 cm bis 5 cm auf. Der Durchmesser des Innenkreises des Grundkörpers liegt bevorzugt im Bereich von 50 cm bis 60 cm.

Weiterhin wird die Aufgabe der Erfindung durch ein Verfahren zum Transportieren eines Kerns für die Herstellung eines Fahrzeugreifens gelöst, vorzugsweise unter Verwendung eines beschriebenen Systems, umfassend folgende Schritte:
- Erzeugen eines magnetischen transportfähigen Zustands mit einer ersten beschriebenen Vorrichtung, indem Permanentmagnete der ersten Vorrichtung in Senkungen einer zweiten kreisringförmigen Vorrichtung eingeführt werden, vorzugsweise einer zweiten Vorrichtung des beschriebenen Systems,
- Transportieren eines Kerns mittels magnetischer Kraft und
- Einstellen des magnetischen transportfähigen Zustands, indem Permanentmagnete aus den Senkungen der zweiten Vorrichtung herausgeführt werden.

Vorteilhafterweise kann ein Kern beim Aufbau einer Karkasse durch das erfindungsgemäße Verfahren optimal transportiert und verbaut werden. Durch das beschriebene Verfahren wird der Kern zentrisch an der Karkasse positioniert, sodass der fertige Reifen letztendlich besser auf der Felge sitzt. Insgesamt wird die Performance des Reifens somit deutlich verbessert.

Weitere Vorteile und Merkmale der erfindungsgemäßen Vorrichtung, des erfindungsgemäßen Systems sowie des Verfahrens ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar, soweit diese technisch möglich sind. Dies gilt auch für die einzelnen Merkmale der nachfolgend diskutierten Ausführungsbeispiele, soweit diese nicht für den Fachmann als zwingend zueinander gehörig erkennbar sind.

### Figurenbeschreibung

Weitere Einzelheiten und Vorteile der vorliegenden Erfindung ergeben sich aus der nachfolgenden Beschreibung der Ausführungsführungsbeispiele in Verbindung mit den Zeichnungen. In diesen zeigen
- Figur 1a, b: eine Ausführungsform der erfindungsgemäßen Vorrichtung zum Transportieren eines Kerns (Fig. 1a) und einen vergrößerten Ausschnitt der Vorrichtung (Fig. 1b),
- Figur 2a, b: eine Seitenansicht des erfindungsgemäßen Systems (Fig. 2a) und eine vergrößerte Querschnittansicht einer Ausführungsform des erfindungsgemäßen Systems (Fig. 2b).
- Figur 3a, b: eine Ausführungsform des erfindungsgemäßen Systems in einem transportfähigen Zustand (Fig. 3a) und einem nicht-transportfähigen Zustand (Fig. 3b) in schematischer Darstellung.

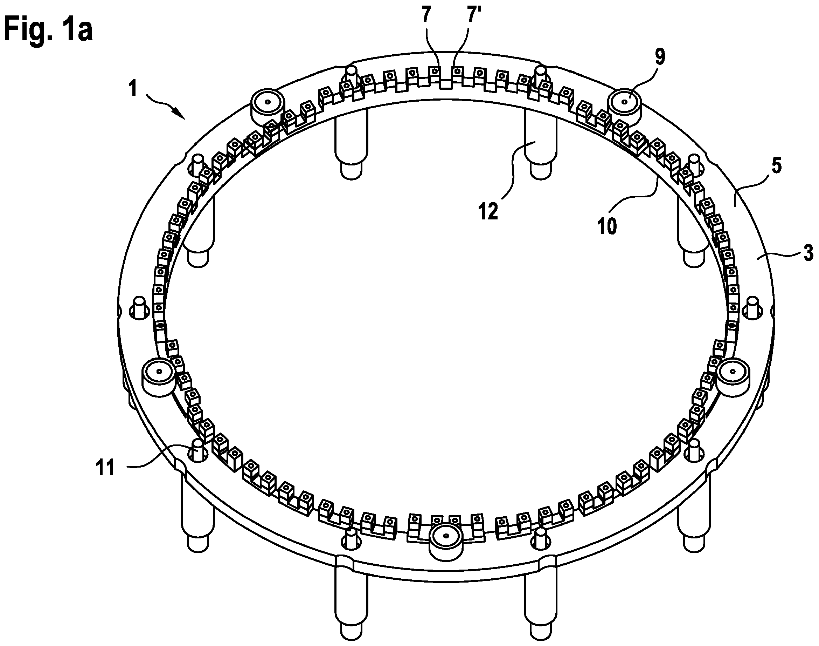

Figur 1a zeigt eine Ausführungsform der erfindungsgemäßen Vorrichtung 1 mit einem kreisringförmigen Grundkörper 3, der auf seiner ersten Seite 5 entlang des inneren Kreisumfangs Permanentmagnete 7 angeordnet aufweist. Die Permanentmagnete 7 sind würfelförmig ausgebildet und weisen somit eine quadratische Kontaktfläche auf, wobei die Pole der Permanentmagnete 7 abwechselnd angeordnet sind. Ferner sind auf der ersten Seite 5 fünf Gleitführungselemente 9 symmetrisch auf dem Grundkörper 3 angeordnet. Diese unterstützen den Vorgang des Zusammenführens der Vorrichtung 1 mit einer anderen Vorrichtung. Zusätzlich sind auf dem Grundkörper 3 zehn Abdrückelemente 11 angeordnet, die die Verbindung zwischen der Kontaktfläche und einem anderen Körper lösen können. Auf einer zweiten Seite 10 des Grundkörpers 3 sind zehn Pneumatikzylinder 12 angeordnet, durch die die Relativbewegung des Grundkörpers 3 in Bezug auf den zu transportierenden Körper vereinfacht wird.

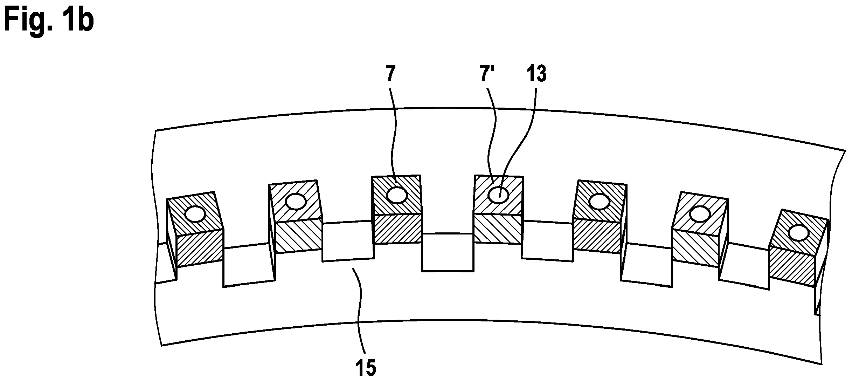

Figur 1b zeigt einen vergrößerten Ausschnitt der erfindungsgemäßen Vorrichtung 1, in der die Permanentmagnete 7 in Bezug auf die Pole alternierend auf dem Grundkörper 3 angeordnet sind. Die abgebildeten Permanentmagnete 7, 7' weisen jeweils eine Senkbohrung 13 auf, über die die Permanentmagnete 7 auf einer Magnethalteeinrichtung 15 verschraubt werden können. Zwei Permanentmagnete 7, 7' sind auf der Magnethalteeinrichtung 15 befestigt, die wiederum auf der Grundplatte 3 verschraubt ist.

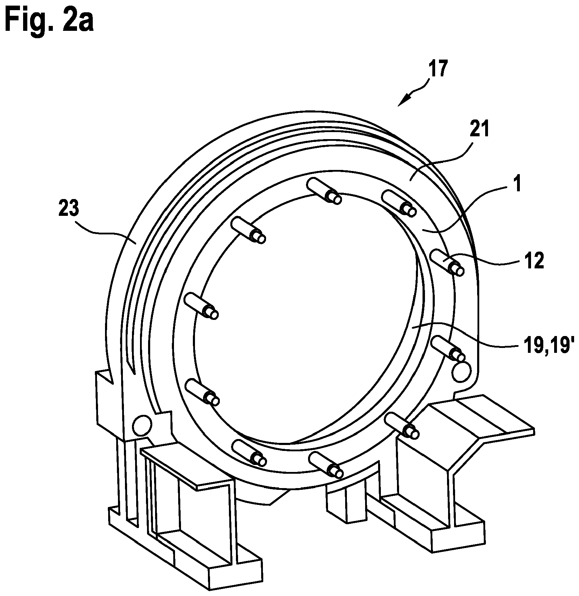

Figur 2a zeigt eine Seitenansicht eines erfindungsgemäßen Systems 17. Das System 17 umfasst eine erste kreisringförmige Vorrichtung 1, eine zweite Vorrichtung 19, die als eine Umbukglocke 19' ausgebildet ist, einen Schlitten für Niederhalter 21 und einen Schlitten für Kernsetzer 23. Auf der zweiten in der Seitenansicht sichtbaren Seite 10 der Vorrichtung 1 sind die zehn Pneumatikzylinder 12 angeordnet. Die Vorrichtung 1 ist relativ zur Umbukglocke 19' bewegbar.

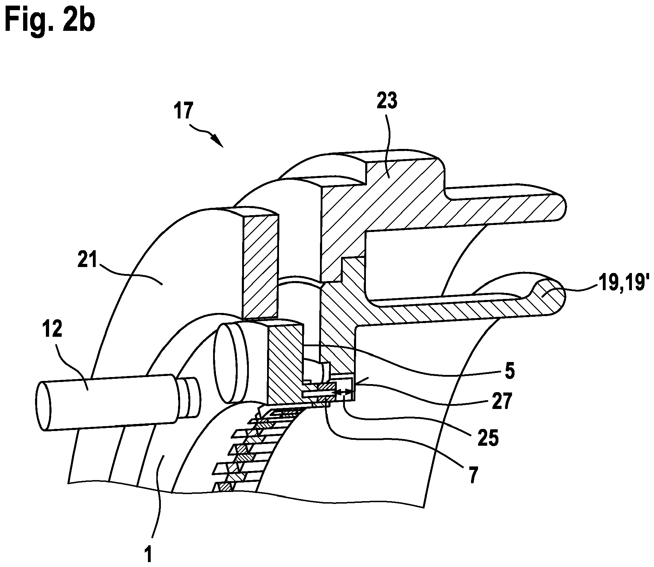

Figur 2b zeigt eine vergrößerte Querschnittansicht einer Ausführungsform des erfindungsgemäßen Systems 17. Die Vorrichtung 1 weist auf der ersten Seite 5 eine Vielzahl von Permanentmagneten 7, 7' auf und auf der zweiten Seite 10 einen in dem Ausschnitt dargestellten Pneumatikzylinder 12. Die Umbukglocke 19' weist eine gleiche Vielzahl von Senkungen 25 auf, die der Anzahl der Permanentmagnete 7, 7' entspricht. Die Vorrichtung 1 ist relativ zur Umbukglocke 19' verschiebbar, sodass bei vollständigem Einführen der Permanentmagnete 7 in die Senkungen 25 ein transportfähiger Zustand erreicht werden kann. Der Kern 29 kann im transportfähigen Zustand im Bereich der magnetisierbaren Kontaktfläche 23 kraftschlüssig festgehalten werden.

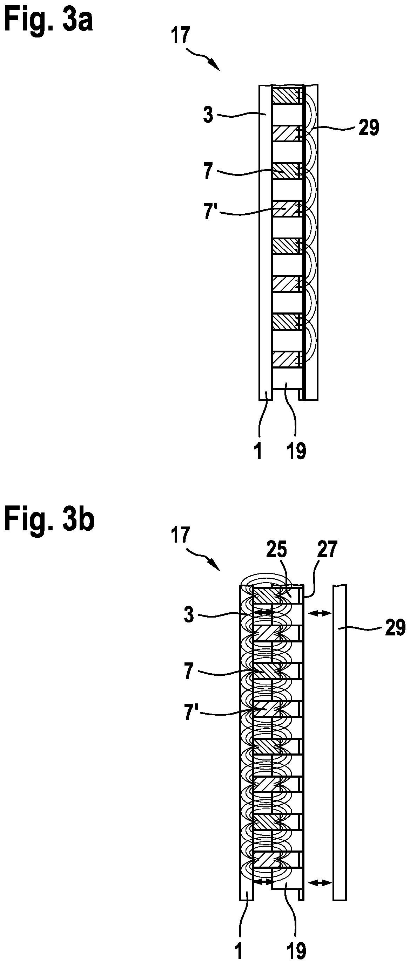

Figuren 3a und 3b zeigen jeweils einen schematischen Ausschnitt eines erfindungsgemäßen Systems 17 mit einer ersten Vorrichtung 1 und einer zweiten Vorrichtung 19. Die erste Vorrichtung 1 weist einen Grundkörper 3 auf, auf dem Permanentmagnete 7, 7' mit abwechselnden Polen angeordnet sind. Die zweite Vorrichtung 19 weist Senkungen 25 auf, in die die Permanentmagneten 7 formschlüssig eingeführt werden können. Figur 2a zeigt das System 17 im transportfähigen Zustand, indem die erste Vorrichtung 1 und die zweite Vorrichtung 19 zusammengeführt sind. In diesem Zustand ist die Kontaktfläche 9 der Permanentmagnete 7, 7' mit der Grundfläche der Senkungen 25 verbunden. So wird die maximale magnetische Kraft an der magnetisierbaren Kontaktfläche 27 erzeugt, um den Kern 29 kraftschlüssig fest transportieren zu können. Figur 2b zeigt das System 17 in einem nicht-transportfähigen Zustand. In diesem Zustand sind die Permanentmagnete 7 aus den Senkungen 25 herausgeführt, sodass die magnetische Kraft an der magnetischen Kontaktfläche 27 nicht ausreicht, um den Kern 29 weiter kraftschlüssig festzuhalten.

### Bezugszeichenliste

- 1: Vorrichtung
- 3: Grundkörper
- 5: erste Seite des Grundkörpers
- 7: Permanentmagnet
- 7': Permanentmagnet mit anderem Pol
- 9: Gleitführungselement
- 10: zweite Seite des Grundkörpers
- 11: Abdrückelement
- 12: Pneumatikzylinder
- 13: Senkbohrung vom Permanentmagneten
- 15: Magnethalteeinrichtung
- 17: System
- 19: zweite Vorrichtung
- 21: Schlitten für Niederhalter
- 23: Schlitten für Kernsetzer
- 25: Senkungen der zweiten Vorrichtung
- 27: magnetische Kontaktfläche
- 29: Kern

## Patentansprüche

1. Vorrichtung (1) zum Transportieren eines Kerns für die Herstellung eines Fahrzeugreifens, umfassend einen ersten kreisringförmigen Grundkörper (2) mit mindestens einer ersten und einer zweiten Seite (5, 10), wobei auf der ersten Seite (5) des Grundkörpers (2) wenigstens zwei Permanentmagnete (7, 7') auf einer Kreisbahn angeordnet sind,
**dadurch gekennzeichnet, dass** die Permanentmagnete (7, 7') mit abwechselnden Polen angeordnet sind.

2. Vorrichtung (1) nach Anspruch 1, **dadurch gekennzeichnet, dass** die Permanentmagnete (7, 7') auf der ersten Seite entlang des inneren Kreisumfangs auf Magnethalteeinrichtungen (15) angeordnet sind.

3. Vorrichtung (1) nach Anspruch 1 oder 2, **dadurch gekennzeichnet, dass** die Permanentmagnete (7, 7') stabförmig oder würfelförmig ausgebildet sind und vorzugsweise jeweils eine quadratische Kontaktfläche aufweisen.

4. Vorrichtung (1) nach einem der vorherigen Ansprüche, **dadurch gekennzeichnet, dass** die Permanentmagnete (7, 7') auf einer Kreisbahn symmetrisch, insbesondere rotationssymmetrisch, angeordnet sind.

5. Vorrichtung (1) nach einem der vorherigen Ansprüche, **dadurch gekennzeichnet, dass** die Permanentmagnete (7, 7') Neodym umfassen, vorzugsweise NdFeB-Magnete sind.

6. Vorrichtung (1) nach einem der vorherigen Ansprüche, **dadurch gekennzeichnet, dass** auf der zweiten Seite (10) mindestens zwei Pneumatikzylinder (12), insbesondere mit jeweils einem Durchmesser im Bereich von 20 mm bis 30 mm, angeordnet sind.

7. Vorrichtung (1) nach einem der vorherigen Ansprüche, **dadurch gekennzeichnet, dass** auf der ersten Seite (5) mindestens zwei Gleitführungselemente (9), bevorzugt rotationssymmetrisch, angeordnet sind.

8. Vorrichtung (1) nach einem der vorherigen Ansprüche, **dadurch gekennzeichnet, dass** auf der ersten Seite mindestens ein Abdrückelement (11) angeordnet ist.

9. System (17) zum Transportieren eines Kerns für die Herstellung eines Fahrzeugreifens, umfassend eine erste Vorrichtung (1) nach einem der Ansprüche 1 bis 8 und eine zweite kreisringförmige Vorrichtung (19) mit mindestens zwei Senkungen (25), **dadurch gekennzeichnet, dass** die Permanentmagnete (7, 7') der ersten Vorrichtung (1) in die Senkungen (25) der zweiten Vorrichtung (19) einführbar sind.

10. Verfahren zum Transportieren eines Kerns (29) für die Herstellung eines Fahrzeugreifens, vorzugsweise unter Verwendung eines Systems (17) nach Anspruch 9, umfassend folgende Schritte:
- Erzeugen eines magnetischen transportfähigen Zustands mit einer Vorrichtung (1) zum Transportieren eines Kerns für die Herstellung eines Fahrzeugreifens, umfassend einen ersten kreisringförmigen Grundkörper (2) mit mindestens einer ersten und einer zweiten Seite (5, 10), wobei auf der ersten Seite (5) des (2) wenigstens zwei Permanentmagnete (7, 7') auf einer Kreisbahn angeordnet sind oder mit einer ersten Vorrichtung (1) nach einem der Ansprüche 1 bis 8, indem Permanentmagnete (7, 7') der ersten Vorrichtung (1) in Senkungen (25) einer zweiten kreisringförmigen Vorrichtung (19) eingeführt werden,
- Transportieren eines Kerns (29) mittels magnetischer Kraft und
- Einstellen des magnetischen transportfähigen Zustands, indem Permanentmagnete (7, 7') aus den Senkungen (25) der zweiten Vorrichtung (19) herausgeführt werden.

## Claims

1. Apparatus (1) for transporting a core for the production of a vehicle tyre, comprising a first circular-ring-shaped main body (2) with at least a first and a second side (5, 10), wherein at least two permanent magnets (7, 7') are arranged on a circular path on the first side (5) of the main body (2),
**characterized in that** the permanent magnets (7, 7') are arranged with alternating poles.

2. Apparatus (1) according to Claim 1, **characterized in that** the permanent magnets (7, 7') are arranged on the first side along the inner circular circumference and on magnet-holding devices (15).

3. Apparatus (1) according to Claim 1 or 2, **characterized in that** the permanent magnets (7, 7') are of bar-shaped or cubic form and preferably each have a square contact surface.

4. Apparatus (1) according to one of the preceding claims, **characterized in that** the permanent magnets (7, 7') are arranged symmetrically, in particular rotationally symmetrically, on a circular path.

5. Apparatus (1) according to one of the preceding claims, **characterized in that** the permanent magnets (7, 7') comprise neodymium, and preferably are NdFeB magnets.

6. Apparatus (1) according to one of the preceding claims, **characterized in that** at least two pneumatic cylinders (12), in particular with in each case a diameter in the range from 20 mm to 30 mm, are arranged on the second side (10).

7. Apparatus (1) according to one of the preceding claims, **characterized in that** at least two sliding guide elements (9) are arranged, preferably rotationally symmetrically, on the first side (5).

8. Apparatus (1) according to one of the preceding claims, **characterized in that** at least one push-away element (11) is arranged on the first side.

9. System (17) for transporting a core for the production of a vehicle tyre, comprising
a first apparatus (1) according to one of Claims 1 to 8, and a second circular-ring-shaped apparatus (19) with at least two depressions (25),
**characterized in that** the permanent magnets (7, 7') of the first apparatus (1) are insertable into the depressions (25) of the second apparatus (19).

10. Method for transporting a core (29) for the production of a vehicle tyre, preferably using a system (17) according to Claim 9, comprising the following steps:
- producing a magnetically transportable state with an apparatus (1) which serves for transporting a core for the production of a vehicle tyre and comprises a first circular-ring-shaped main body (2) with at least a first and a second side (5, 10), wherein at least two permanent magnets (7, 7') are arranged on a circular path on the first side (5) of the main body (2), or with a first apparatus (1) according to one of Claims 1 to 8, in that permanent magnets (7, 7') of the first apparatus (1) are inserted into depressions (25) of a second circular-ring-shaped apparatus (19),
- transporting a core (29) by means of magnetic force, and
- discontinuing the magnetically transportable state in that permanent magnets (7, 7') are guided out of the depressions (25) of the second apparatus (19).

## Revendications

1. Dispositif (1) pour transporter un noyau pour la fabrication d'un pneu de véhicule, comprenant un premier corps de base en forme d'anneau circulaire (2) avec au moins un premier et un deuxième côté (5, 10), au moins deux aimants permanents (7, 7') étant agencés sur une trajectoire circulaire sur le premier côté (5) du corps de base (2),
**caractérisé en ce que** les aimants permanents (7, 7') sont agencés avec des pôles alternés.

2. Dispositif (1) selon la revendication 1, **caractérisé en ce que** les aimants permanents (7, 7') sont agencés sur des appareils de support d'aimant (15) sur le premier côté le long de la circonférence circulaire interne.

3. Dispositif (1) selon la revendication 1 ou 2, **caractérisé en ce que** les aimants permanents (7, 7') sont configurés en forme de barre ou en forme de cube et présentent de préférence chacun une surface de contact carrée.

4. Dispositif (1) selon l'une quelconque des revendications précédentes, **caractérisé en ce que** les aimants permanents (7, 7') sont agencés sur une trajectoire circulaire de manière symétrique, notamment de manière symétrique en rotation.

5. Dispositif (1) selon l'une quelconque des revendications précédentes, **caractérisé en ce que** les aimants permanents (7, 7') comprennent du néodyme, de préférence sont des aimants NdFeB.

6. Dispositif (1) selon l'une quelconque des revendications précédentes, **caractérisé en ce que** sur le deuxième côté (10) sont agencés au moins deux cylindres pneumatiques (12), notamment avec un diamètre respectif dans la plage de 20 mm à 30 mm.

7. Dispositif (1) selon l'une quelconque des revendications précédentes, **caractérisé en ce que** sur le premier côté (5) sont agencés au moins deux éléments de guidage par glissement (9), de préférence de manière symétrique en rotation.

8. Dispositif (1) selon l'une quelconque des revendications précédentes, **caractérisé en ce qu'**au moins un élément de déjantement (11) est agencé sur le premier côté.

9. Système (17) de transport d'un noyau pour la fabrication d'un pneu de véhicule, comprenant
un premier dispositif (1) selon l'une quelconque des revendications 1 à 8 et un deuxième dispositif en forme d'anneau circulaire (19) avec au moins deux creux (25), **caractérisé en ce que** les aimants permanents (7, 7') du premier dispositif (1) peuvent être introduits dans les creux (25) du deuxième dispositif (19).

10. Procédé de transport d'un noyau (29) pour la fabrication d'un pneu de véhicule, de préférence en utilisant un système (17) selon la revendication 9, comprenant les étapes suivantes :
- la production d'un état magnétique apte au transport avec un dispositif (1) pour transporter un noyau pour la fabrication d'un pneu de véhicule, comprenant un premier corps de base en forme d'anneau circulaire (2) avec au moins un premier et un deuxième côté (5, 10), au moins deux aimants permanents (7, 7') étant agencés sur une trajectoire circulaire sur le premier côté (5) du (2) ou avec un premier dispositif (1) selon l'une quelconque des revendications 1 à 8, en introduisant des aimants permanents (7, 7') du premier dispositif (1) dans des creux (25) d'un deuxième dispositif en forme d'anneau circulaire (19),
- le transport d'un noyau (29) au moyen d'une force magnétique et
- l'ajustement de l'état magnétique apte au transport en sortant des aimants permanents (7, 7') des creux (25) du deuxième dispositif (19).
